(19) Europäisches Patentamt
European Patent Office
Office européen des brevets

(11) **EP 3 879 199 B1**

(12) **EUROPÄISCHE PATENTSCHRIFT**

(45) Veröffentlichungstag und Bekanntmachung des Hinweises auf die Patenterteilung:
**14.09.2022 Patentblatt 2022/37**

(21) Anmeldenummer: **20162978.9**

(22) Anmeldetag: **13.03.2020**

(51) Internationale Patentklassifikation (IPC):
**F24F 11/64** *(2018.01)* **F24F 11/74** *(2018.01)*
**F24F 13/10** *(2006.01)* **F24F 11/72** *(2018.01)*
**G05D 7/06** *(2006.01)*

(52) Gemeinsame Patentklassifikation (CPC):
**F24F 11/64; F24F 11/72; F24F 13/10; G05D 7/0635**

(54) **VERFAHREN ZUR REGELUNG EINES IN EINER LUFTLEITUNG EINER KLIMA- UND/ODER RAUMLUFTTECHNISCHEN ANLAGE STRÖMENDEN VOLUMENSTROMS SOWIE SYSTEM ZUR REGELUNG EINES IN EINER LUFTLEITUNG EINER KLIMA- UND/ODER RAUMLUFTTECHNISCHEN ANLAGE STRÖMENDEN VOLUMENSTROMS**

METHOD FOR CONTROLLING A VOLUME FLOW FLOWING IN AN AIR DUCT OF AN AIR CONDITIONING AND / OR ROOM AIR SYSTEM AND SYSTEM FOR CONTROLLING A VOLUME FLOW IN AN AIR DUCT OF AN AIR CONDITIONING AND / OR ROOM AIR SYSTEM

PROCÉDÉ DE RÉGULATION D'UN DÉBIT VOLUMIQUE CIRCULANT DANS UNE CONDUITE D'AIR D'UNE INSTALLATION TECHNIQUE DE CLIMATISATION ET/OU D'AÉRATION, AINSI QUE SYSTÈME DE RÉGULATION D'UN DÉBIT VOLUMIQUE DANS UNE CONDUITE D'AIR D'UNE INSTALLATION TECHNIQUE DE CLIMATISATION ET/OU D'AÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.09.2021 Patentblatt 2021/37**

(73) Patentinhaber: TROX GmbH
**47506 Neukirchen-Vluyn (DE)**

(72) Erfinder: **Sadkowski, Manfred**
**47608 Geldern (DE)**

(74) Vertreter: **Dr. Stark & Partner Patentanwälte mbB**
**Moerser Straße 140**
**47803 Krefeld (DE)**

(56) Entgegenhaltungen:
**EP-A2- 1 980 798     DE-B3-102007 019 231**
**US-A- 4 796 651**

EP 3 879 199 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Regelung eines in einer Luftleitung einer klima- und/oder raumlufttechnischen Anlage strömenden Volumenstroms mittels eines in der Luftleitung um eine Schwenkachse schwenkbar gelagerten Klappenblattes, wobei das Klappenblatt mittels eines Antriebes zwischen einer Maximal-Offenstellung und einer Maximal-Zustellung verschwenkbar ist, wobei der tatsächliche Volumenstrom durch Erfassung zumindest eines geeigneten Ist-Wertes, beispielsweise einer Druckdifferenz, bestimmt wird und wobei für verschiedene Betriebszustände Sollwerte und zugeordnete Winkelstellungen der Regelstellung des Klappenblattes in einer Datenbank hinterlegt sind, wobei mittels einer elektronischen Steuer- und/oder Regeleinrichtung ein Vergleich zwischen dem jeweils aktuell bestimmten Ist-Wert des Volumenstroms und dem aktuell vorgewählten Sollwert vorgenommen wird und wobei das Klappenblatt während des Betriebs mittels des Antriebes in Abhängigkeit von dem IstWert zwischen einer Grundstellung und einer Regelstellung verschwenkt wird, wobei die Steuer- und/oder Regeleinrichtung bei einem oberhalb des aktuell vorgewählten Sollwerts liegenden Istwert ein Stellsignal an den Antrieb ausgibt, woraufhin der Antrieb das Klappenblatt aus seiner aktuellen Stellung in seine für den aktuell eingestellten Sollwert hinterlegte Regelstellung verlagert, sofern sich das Klappenblatt noch nicht in seiner maximal möglichen Regelstellung befindet.

Ein mittels eines Antriebs betriebener Volumenstromregler hält in einer Luftleitung den Volumenstrom auch bei schwankenden Umgebungseinflüssen konstant. Hierfür weist der Volumenstromregler ein Klappenblatt auf, das von dem Antrieb verlagert wird. Ein Volumenstromregler folgt einem vorgegebenen Sollwert (Volumenstrom). Ist bei einer Volumenstromregelung eines mittels eines Antriebs betriebenen Volumenstromreglers der Istwert kleiner als der Sollwert, befindet sich das Klappenblatt in seiner Maximal-Offenstellung. In der Maximal-Offenstellung ist das Klappenblatt parallel zur Strömung ausgerichtet. Aus dieser Maximal-Offenstellung erfolgt bei Überschreiten des Sollwertes die Regelung des Volumenstroms, in dem das Klappenblatt in seine Regelstellung verlagert wird. Da die Regelung aus der Maximal-Offenstellung des Klappenblattes heraus erfolgt, variiert der Verschwenkweg und damit auch die Verschwenkdauer des Klappenblattes in seine Regelstellung.

Zur Bestimmung des Volumenstroms wird üblicherweise ein Differenzdrucksensor mit zumindest zwei Entnahmestellen eingesetzt. Über die Entnahmestellen wird der Differenzdruck, d.h. der Wirkdruck, bestimmt. Aus dem Differenzdruck wird dann der Volumenstrom bestimmt. Sofern der Differenzdrucksensor für die Volumenstrombestimmung vor dem Klappenblatt angeordnet ist, ist der zu regelnde Wirkdruck unabhängig von der Stellung des Klappenblattes. Eine solche Sollwertvorgabe ist konstant. Der so genannte Widerstandsbeiwert $\zeta$ ist konstant. Nachteilig erweist sich bei derartig ausgebildeten Volumenstromregelern, dass unter schlechten Anströmbedingungen der Sollwert mit hohen Toleranzen ausgeregelt wird.

Ferner sind Volumenstromregler bekannt, bei denen die Wirkdruckmessung über das Klappenblatt erfolgt. Bei einer Wirkdruckmessung über das Klappenblatt ist der zu regelnde Wirkdruck nicht konstant. So wird der Wirkdruck in diesem Fall von der Stellung des Klappenblattes beeinflusst. Der Widerstandsbeiwert $\zeta$ ist insoweit nicht konstant. Daher ändert sich das Wirkdrucksignal entsprechend der Stellung des Klappenblattes. Wird bei einer solchen Ausgestaltung mit einem in seiner Maximal-Offenstellung befindlichen Klappenblatt ein geringer Volumenstrom geregelt, ist der bestimmte Wirkdruck sehr klein. Unter Berücksichtigung der Toleranzen der zugehörigen Regelkomponenten kann der Istwert stark vom Sollwert abweichen.

Die Patentschrift DE 10 2007 019231 beschreibt ein Verfahren bzw. ein System, das den Merkmalen der Präambel von Anspruch 1 bzw. 7 entspricht.

Aufgabe der Erfindung ist es, die vorgenannten Nachteile zu vermeiden und ein Verfahren anzugeben, das eine genauere Regelung eines Volumenstroms in einer Luftleitung ermöglicht.

Diese Aufgabe wird dadurch gelöst, dass in der Datenbank für die verschiedenen Betriebszustände neben den Sollwerten und den zugeordneten Winkelstellungen der Regelstellung zusätzlich Winkelstellungen für Vordrosselstellungen hinterlegt sind, wobei die Winkelstellung der Vordrosselstellungen größer als die Maximal-Offenstellung und kleiner als die Regelstellung ist und wobei die Steuer- und/oder Regeleinrichtung bereits bei einem Ist-Wert, der kleiner als der hinterlegte Sollwert ist, ein Stellsignal an den Antrieb ausgibt, woraufhin der Antrieb das Klappenblatt aus seiner aktuellen Stellung in eine für den aktuell eingestellten Sollwert hinterlegte Vordrosselstellung verlagert, sofern sich das Klappenblatt noch nicht in seiner Vordrosselstellung befindet.

Damit befindet sich das Klappenblatt während des Betriebs zu jedem Zeitpunkt, zu dem der Istwert kleiner als der Sollwert ist, in der dem zu regelnden Sollwert entsprechenden Vordrosselstellung. Die Drosselwirkung des Klappenblattes ist in der dem zu regelnden Sollwert entsprechenden Vordrosselstellung geringer als in der Regelstellung.

Unter der Maximal-Offenstellung wird der maximale Öffnungsgrad verstanden. Je nach dem System oder nach der Anlage, in dem bzw. in der das Verfahren betrieben wird, kann die Maximal-Offenstellung schwanken. In der Maximal-Offenstellung kann das Klappenblatt maximal mit der Strömung fluchten, wodurch der resultierende Strömungswiderstand am geringsten ist.

Unter der Maximal-Zustellung wird der maximale Schließgrad verstanden. Je nach dem System oder nach der Anlage, in dem bzw. in der das Verfahren betrieben wird, kann die Maximal-Zustellung schwanken.

In der Maximal-Zustellung kann das Klappenblatt maximal senkrecht zur Strömung ausgerichtet sein, wodurch der resultierende Strömungswiderstand am höchsten ist.

In der Regelstellung ist der Sollwert kleiner als der Istwert, während in der Grundstellung der Sollwert gleich dem Istwert oder größer als der Istwert ist. In der Vordrosselstellung ist der Schließwinkel des Klappenblattes größer als in der Maximal-Offenstellung, jedoch kleiner als in der Regelstellung.

Bei dem erfindungsgemäßen Verfahren wird schon bei einem geringen Volumenstrom, der unterhalb des Sollwertes ist, d.h. während des Betriebs, das Klappenblatt durch den Antrieb in die dem zu regelnden Sollwert entsprechende Vordrosselstellung verlagert. In der Vordrosselstellung wird der Strömungsquerschnitt des Gehäuses geringfügig eingeschnürt. Infolge der Verlagerung des Klappenblattes in die Vordrosselstellung ergibt sich ein höherer Wirkdruck, so dass aufgrund dessen auch bei niedrigen Volumenströmen eine genauere Regelung möglich ist. Insoweit wird bei dem erfindungsgemäßen Verfahren durch die Verlagerung des Klappenblattes in die Vordrosselstellung der Druckverlust angehoben, noch bevor der Ist-Wert den Sollwert überschreitet.

Überschreitet der Istwert den Sollwert, wird das Klappenblatt durch den Antrieb aus der Vordrosselstellung in seine Regelstellung verlagert. In der Regelstellung wird dann der Volumenstrom auf den Sollwert gedrosselt. Da der Verlagerungsweg aus der Vordrosselstellung in die Regelstellung kürzer als im Stand der Technik ist, nimmt das Klappenblatt schneller seine Regelstellung ein.

Die Vordrosselstellungen werden in Versuchen einmalig, beispielsweise für einen Volumenstromregler, für den kompletten relevanten Volumenstrombereich $V_{min}$ bis $V_{nom}$ ermittelt. Die Vordrosselstellungen können beispielsweise so gewählt sein, dass die betreffenden, sich aus den Vordrosselstellungen ergebenden Mindestdruckverluste über den kompletten Sollwertbereich, d. h. von 0% bis 100%, variieren. Die Vordrosselstellungen sind so gewählt, dass ein größerer Druckunterschied als in der Maximal-Offenstellung vorliegt, ohne dass die durch diese Stellung resultierende Verringerung des Strömungsquerschnittes beispielsweise wegen einer Geräuschbildung als störend empfunden wird. Auf Basis dieser Ergebnisse wird eine mathematische Funktion aufgestellt, mittels der in Abhängigkeit von dem gewünschten Sollwert dann die Vordrosselstellung bestimmt wird.

Nachfolgend ist beispielhaft eine Funktion zur Bestimmung der Vordrosselstellung in Abhängigkeit von dem gewünschten Sollwert eingeblendet:

$$\alpha = m \cdot y^n$$

$\alpha =$    Klappenblattwinkel
$m =$    Konstante (Faktor)
$y =$    Sollwert (Volumenstrom)
$n -$    Exponent

Diese Funktion gilt über den kompletten Sollwertbereich, d.h. von 0% bis 100%. Die Vordrosselstellungen des Klappenblattes sind in der Steuer- und/oder Regeleinrichtung als eine Funktion vom Sollwert hinterlegt.

Die Sollwerte können beispielsweise über ein Potentiometer, über ein Spannungssignal oder ein Bussignal vorgegeben werden. So kann die Steuer- und/oder Regeleinrichtung eines Volumenstromreglers beispielsweise mit einem Raumtemperatur- oder Luftqualitätsregler verbunden sein. Es ist aber auch möglich, dass eine Verbindung zu einer übergeordneten Regelung, beispielsweise der Gebäudeleittechnik oder einer DDC-Unterstation (Direct Digital Control-Station), besteht. DDC-Unterstationen sind Bestandteil der Gebäudeleittechnik und sind in einem Gebäude verteilt angeordnet. Sie übernehmen Steuerungs- und Regelungsaufgaben. In einem solchen Fall erhält der Volumenstromregler von der übergeordneten Regelung die Sollwerte für die Luftmenge, die den wechselnden Erfordernissen entspricht. Der Volumenstromregler sorgt dann selbsttätig für deren Einhaltung.

Dabei kann die Steuer- und/oder Regeleinrichtung bei einem oberhalb des Istwertes liegenden Sollwert ein Stellsignal an den Antrieb ausgeben, woraufhin der Antrieb das Klappenblatt aus seiner aktuellen Stellung in Richtung der für den aktuell eingestellten Sollwert hinterlegte Vordrosselstellung verlagert, sofern sich das Klappenblatt noch nicht bereits in der für den aktuell eingestellten Sollwert hinterlegten Vordrosselstellung befindet.

Vorzugsweise ist die Vordrosselstellung in Abhängigkeit vom jeweiligen Sollwert so festgelegt, dass für alle Sollwerte bei einem entsprechend dem Sollwert herrschenden Betriebszustand der Differenzdruck über das Klappenblatt einheitlich ist. Damit sind die betreffenden, sich aus den Vordrosselstellungen ergebenden Druckverluste über den kompletten Sollwertbereich, d.h. von 0% bis 100%, konstant. Bei einer solchen Ausgestaltung liegt insoweit ein annähernd konstanter Mindestdruckverlust über den kompletten Sollwertbereich vor, wenn sich das Klappenblatt in seiner betreffenden Vordrosselstellung befindet. Der gewünschte Mindestdruckverlust kann dem entsprechenden Sollwert angepasst werden.

Als Antrieb kann ein elektrisch betriebener Antrieb verwendet werden. Es können aber auch andere Arten eines Antriebs, beispielsweise ein pneumatischer Antrieb, eingesetzt werden.

Zur Bestimmung des strömenden Volumenstroms (Ist-Wert) kann ein zumindest zwei Entnahmestellen aufweisender Differenzdrucksensor verwendet werden. Die Entnahmestellen sind beispielsweise in Strömungsrichtung gesehen hintereinander angeordnet. Aus den über die Entnahmestellen gemessenen Drücken wird der Differenzdruck bestimmt. Aus dem Differenzdruck wiederum kann der in der Luftleitung strömende Volumenstrom (Ist-Wert) berechnet werden. Selbstverständlich sind auch andere Verfahren zur Bestimmung des Volumenstroms möglich.

Zur Umwandlung des bestimmten Differenzdruckes in ein elektrisches Signal kann ein mit der Steuer- und/oder Regeleinrichtung verbundener Transmitter verwendet werden.

Die Erfindung betrifft auch ein System zur Regelung eines in einer Luftleitung einer klima- und/oder raumlufttechnischen Anlage strömenden Volumenstroms, umfassend ein in der Luftleitung um eine Schwenkachse schwenkbar gelagertes Klappenblatt, wobei das Klappenblatt mittels eines Antriebes zwischen einer Maximal-Offenstellung und einer Maximal-Zustellung verschwenkbar ist, eine Einrichtung zur Erfassung zumindest eines geeigneten Ist-Wertes zur Bestimmung des tatsächlichen Volumenstroms, eine Datenbank, in der für verschiedene Betriebszustände Sollwerte und zugeordnete Winkelstellungen der Regelstellung des Klappenblattes hinterlegt sind, und eine elektronische Steuer- und/oder Regeleinrichtung, mittels der ein Vergleich zwischen dem jeweils aktuell bestimmten Ist-Wert des Volumenstroms und dem aktuell vorgewählten Sollwert vorgenommen wird und das Klappenblatt während des Betriebs mittels des Antriebes in Abhängigkeit von dem Ist-Wert zwischen einer Grundstellung und einer Regelstellung verschwenkt wird und wobei die Steuer- und/oder die Regeleinrichtung bei einem oberhalb des aktuell vorgewählten Sollwerts liegenden Istwert ein Stellsignal an den Antrieb ausgibt, woraufhin der Antrieb das Klappenblatt aus seiner aktuellen Stellung in seine für den aktuell eingestellten Sollwert hinterlegte Regelstellung verlagert, insbesondere zur Durchführung des vorbeschriebenen Verfahrens.

Aufgabe der Erfindung ist es auch, ein System anzugeben, das eine genauere Regelung eines Volumenstroms in einer Luftleitung ermöglicht.

Die Aufgabe wird dadurch gelöst, dass in der Datenbank für die verschiedenen Betriebszustände neben den Sollwerten und den zugeordneten Winkelstellungen der Regelstellung zusätzlich Winkelstellungen für Vordrosselstellungen hinterlegt sind, wobei die Winkelstellung der Vordrosselstellungen größer als die Maximal-Offenstellung und kleiner als die Regelstellung ist, und die Steuer- und/oder Regeleinrichtung eine Steuerung und/oder eine Regelung umfasst, die derart eingerichtet ist, dass die Steuer- und/oder die Regeleinrichtung bereits bei einem Ist-Wert, der kleiner als der hinterlegte Sollwert ist, ein Stellsignal an den Antrieb ausgibt, woraufhin der Antrieb das Klappenblatt aus seiner aktuellen Stellung in eine für den aktuell eingestellten Sollwert hinterlegte Vordrosselstellung verlagert.

Das erfindungsgemäße System kann beispielsweise als Volumenstromregler mit einem Antrieb ausgebildet sein. Entsprechende Volumenstromregler, bei denen der Antrieb mit elektrischer oder pneumatischer Hilfsenergie betrieben wird, werden auch als Volumenstrom-Regelgeräte (VAV(variable air volume)-Geräte) bezeichnet. Das erfindungsgemäße System kann als Konstant-Volumenstromregler ausgebildet sein, der auf einen festen Sollwert (Volumenstrom) eingestellt ist. Der Volumenstromregler hält den eingestellten Sollvolumenstrom kanaldruckunabhängig konstant. Bei dem erfindungsgemäßen System kann es sich auch um einen variablen Volumenstromregler handeln. In diesem Fall sind variable Sollwerte einstellbar und regelbar, d.h. variable Sollvolumenströme können kanaldruckunabhängig konstant gehalten werden.

Als Antrieb kann ein elektrisch betriebener Antrieb vorgesehen sein. Es sind aber auch andere Arten eines Antriebs, beispielsweise ein pneumatischer Antrieb, denkbar.

Zur Bestimmung des strömenden Volumenstroms (Ist-Wert) kann ein zumindest zwei Entnahmestellen aufweisender Differenzdrucksensor vorgesehen sein.

Dabei kann zur Umwandlung des bestimmten Differenzdruckes in ein elektrisches Signal ein mit der Steuer- und/oder Regeleinrichtung verbundener Transmitter vorgesehen sein.

Im Folgenden wird ein in der Zeichnung dargestelltes Ausführungsbeispiel der Erfindung erläutert. Es zeigen:

Fig. 1    ein Diagramm, in dem der Gesamt-Differenzdruck über den Volumenstromregler pt-p0 [Pa] bei einem im Stand der Technik bekannten Verfahren gegenüber dem Volumenstrom bzw. dem Sollwert [%] aufgetragen ist,

Fig. 2    ein Diagramm, in dem der Gesamt-Differenzdruck über den Volumenstromregler pt-p0 [Pa] bei dem erfindungsgemäßen Verfahren gegenüber dem Volumenstrom bzw. dem Sollwert [%] aufgetragen ist und

Fig. 3    eine Prinzipskizze eines erfindungsgemäßen Systems.

In allen Figuren werden für gleiche bzw. gleichartige Bauteile übereinstimmende Bezugszeichen verwendet.

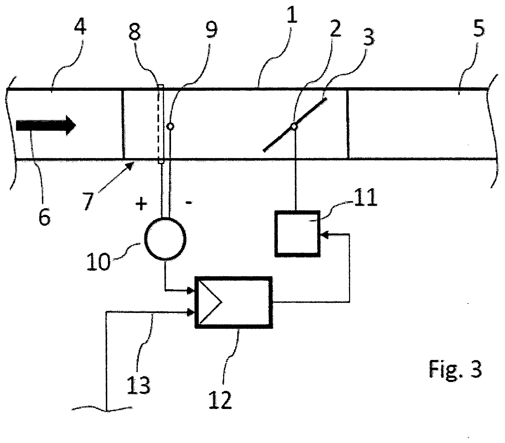

Figur 3 zeigt ein als Volumenstromregler ausgebildetes erfindungsgemäßes System umfassend ein Gehäuse 1 mit einem darin um eine Schwenkachse 2 drehbar gelagerten Klappenblatt 3. In dem dargestellten Fall wird die Luftleitung durch das Gehäuse 1 des Volumenstromreglers gebildet. Die beiden Enden des Gehäuses 1 sind mit Luftleitungen 4, 5 eines nicht näher dargestellten bauseitigen Be- und/oder Entlüftungssystems verbunden.

Dem Klappenblatt 3 ist in Strömungsrichtung 6 gesehen vorgelagert zur Messung des Differenzdruckes ein Mittelwert bildender Differenzdrucksensor 7 angeordnet. Der Differenzdrucksensor 7 weist zwei Entnahmestellen 8, 9 auf, die in Strömungsrichtung 6 gesehen hintereinander angeordnet sind. Die Entnahmestellen 8, 9 des Differenzdrucksensors 7 sind so angeordnet, dass eine möglichst gute Mess- und folglich Regelgenauigkeit gewährleistet ist. Der Differenzdrucksensor 7 ist mit einem Transmitter 10 verbunden.

Wie Figur 3 zu entnehmen ist, umfasst der Volumenstromregler ferner einen elektrischen Antrieb 11 zur Verlagerung des Klappenblattes 3. In dem dargestellten Ausführungsbeispiel ist der Antrieb 11 außerhalb des Gehäuses 1 angeordnet. Darüber hinaus ist eine elektronische Steuer- und/oder Regeleinrichtung 12 vorgesehen, die sowohl mit dem Transmitter 10 als auch mit dem Antrieb 11 verbunden ist.

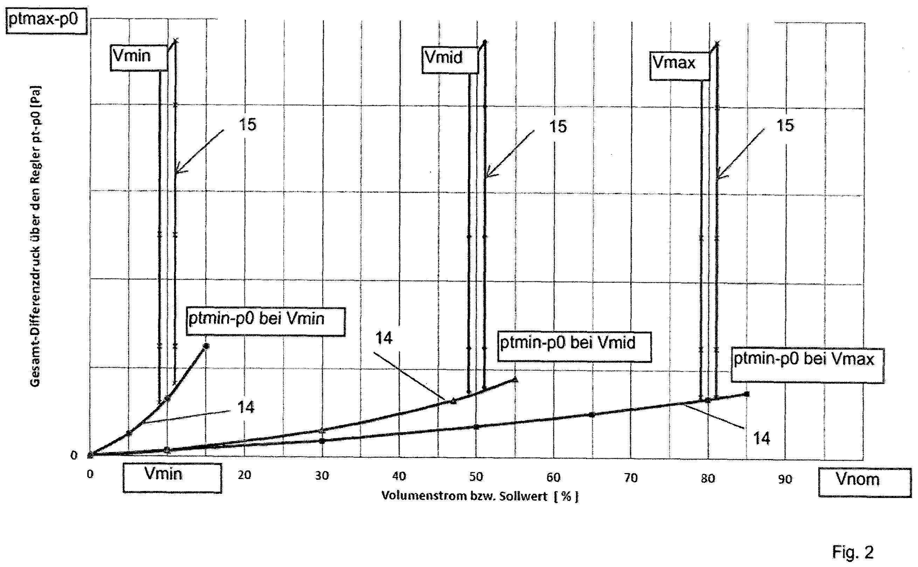

Die vorbeschriebene Ausgestaltung ermöglicht eine Regelung des Volumenstroms des gasförmigen Mediums nach dem erfindungsgemäßen Verfahren, die im Folgenden noch anhand von Fig. 2 detailliert beschrieben wird. Mittels des Differenzdrucksensors 7 wird der Differenzdruck (Wirkdruck) bestimmt. Dieser ermittelte Differenzdruck wird von dem Transmitter 10 in ein elektrisches Signal umgewandelt und nach Übertragung an die Steuer- und/oder Regeleinrichtung 12 von dieser ausgewertet. Im Rahmen dieser Auswertung nimmt die Steuer- und/oder Regeleinrichtung 12 einen Vergleich des gemessenen Istwerts, den sie von dem Transmitter 10 erhalten hat, und einem hinterlegten Sollwert vor. Bei einer Abweichung gibt die Steuer- und/oder Regeleinrichtung 12 ein Stellsignal an den Antrieb 11 aus, so dass dieser die Stellung des Klappenblattes 3 entsprechend ändert.

In dem in Fig. 3 dargestellten Ausführungsbeispiel erhält die Steuer- und/oder Regeleinrichtung 12 über eine Leitung 13 die Sollwerte für die Luftmenge, d. h. den Volumenstrom. Sofern die Leitung 13 beispielsweise mit einem Raumtemperaturregler verbunden ist, handelt es sich um eine dezentrale Verwendung des Volumenstromreglers. Die Leitung 13 kann aber auch mit einer nicht näher dargestellten übergeordneten Regelung, beispielsweise einer Gebäudeleittechnik, verbunden sein. In einem solchen Anwendungsfall wird der Volumenstromregler zentral verwendet.

Die Steuer- und/oder Regeleinrichtung 12 umfasst eine Steuerung und/oder eine Regelung, die derart eingerichtet ist, dass - wie nachfolgend noch anhand von Fig. 2 beschrieben werden wird - die Steuer- und/oder Regeleinrichtung 12 bereits bei einem Ist-Wert, der kleiner als der hinterlegte Sollwert ist, ein Stellsignal an den Antrieb 11 ausgibt, woraufhin der Antrieb 11 das Klappenblatt 3 aus seiner aktuellen Stellung in eine für den aktuell eingestellten Sollwert hinterlegte Vordrosselstellung verlagert. Hierfür sind in einer nicht dargestellten Datenbank, die beispielsweise in der Steuer- und/oder Regeleinrichtung 12 enthalten sein kann, für die verschiedenen Betriebszustände neben den Sollwerten und den zugeordneten Winkelstellungen des Klappenblattes 3 der Regelstellung zusätzlich auch die Winkelstellungen für Vordrosselstellungen des Klappenblattes 3 für die verschiedene Sollwerte hinterlegt.

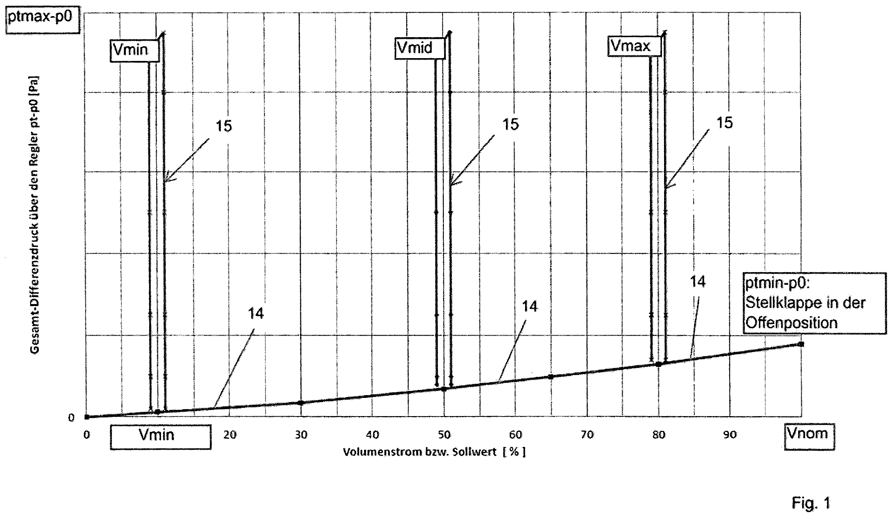

In dem Diagramm nach Figur 1 ist der Gesamt-Differenzdruck über den Volumenstromregler pt-p0 [Pa] gegenüber dem Volumenstrom bzw. dem Sollwert [%] bei dem im Stand der Technik angewandten Verfahren aufgetragen.

In Fig. 1 ist eine Kurve 14, auch Druckverlustkurve oder Mindestdruckverlustkurve genannt, dargestellt, die im Nullpunkt beginnt und bis zum Volumenstrom $V_{nom}$ ansteigt. Die Kurve 14 zeigt den Verlauf des Gesamtdruckes über dem Volumenstrom bzw. über dem Sollwert. Unterhalb der Kurve 14 ist eine Regelung des Volumenstroms durch das betreffende System, beispielsweise den Volumenstromregler, nicht möglich, da sich das Klappenblatt 3 durchgehend in seiner vollständigen Offenstellung befindet, d.h. das Klappenblatt 3 ist parallel zu dem in dem Gehäuse 1 strömenden Medium ausgerichtet. Ursächlich für den leicht ansteigenden Verlauf der Kurve 14 ist der natürliche Druckverlust, den das Klappenblatt 3 in dem Gehäuse 1, d.h. in der Luftleitung, erzeugt. Erst bei einem Differenzdruck, der oberhalb der Kurve 14 liegt, ist eine Regelung des Volumenstroms durch den Volumenstromregler möglich.

In Fig. 1 sind beispielhaft die drei Sollwerte $V_{min}$, $V_{mid}$ und Vmax dargestellt, wobei $V_{min}$ vorliegend einem Sollwert von 10%, $V_{mid}$ einem Sollwert von 50% und Vmax einem Sollwert von 80% entspricht. Der Wert $V_{nom}$ ist der mit dem betreffenden Volumenstromregler maximal zu regelnde Volumenstrom.

Im Betrieb nimmt der Volumenstromregler fortlaufend einen Vergleich von Sollwert und Istwert vor. Der Ist-Wert wird über den durch den Differenzdrucksensor 7 gemessenen Differenzdruck (Wirkdruck) bestimmt. Wird der eingestellte Sollwert, wie beispielsweise $V_{min}$, überschritten, wird das Klappenblatt 3 mittels des Antriebes 11 aus seiner Maximal-Offenstellung, in der das Klappenblatt 3 parallel zur Strömung ausgerichtet ist, in seine Regelstellung verlagert. Dies ist durch den nahezu senkrecht nach oben verlaufenden Verlauf der zu dem Sollwert $V_{min}$ gehörenden Kurve 15 angedeutet. Man erkennt, dass der Volumenstrom bei unterschiedlichen Druckdifferenzen pt-p0 [Pa] konstant gehalten wird. Die zwei in einem geringen Abstand zueinander angeordneten parallel senkrecht verlaufenden Linien einer jeden Kurve 15 sind in der Hysterese begründet. Ursächlich hierfür sind bei einem elektronischen Volumenstromregler das Getriebespiel des Reglers und das Totband.

Durch die Verlagerung des Klappenblattes 3 (Kurve 15) mittels des Antriebes 11 aus seiner Maximal-Offenstellung in seine Regelstellung bei Überschreiten des betreffenden Sollwertes wird durch die Verlagerung des Klappenblattes 3 der voreingestellte Sollwert wieder eingestellt. Entspricht der Sollwert nach der Verlagerung dem Istwert, ist das Klappenblatt 3 ausgeregelt und behält diese Stellung bei. Ändert sich der Druckverlust wieder, wird das Klappenblatt 3 bei steigendem Druckverlust noch weiter geschlossen oder bei fallendem Druckverlust wieder in seine Maximal-Offenstellung zurückgeschwenkt.

Der Volumenstrom wird anhand einer Funktion aus dem gemessenen Drucksignal und aus der gemessenen Winkelstellung des Klappenblattes 3 ermittelt. Wie Fig. 1 zu entnehmen ist, besteht bei dem im Stand der Technik bekannten Verfahren nur eine einzige Mindestdruckverlustkurve 14, die sich über den ganzen Bereich, d.h. von 0% bis 100%, erstreckt. Aus dieser Kurve 14 heraus werden alle Sollwerte, wie beispielsweise $V_{min}$, $V_{mid}$ und Vmax, gemäß der jeweiligen Kurve 15 geregelt. Der Mindestdruckverlust ist daher unterschiedlich, da sich das Klappenblatt 3 fortwährend in seiner Maximal-Offenstellung befindet, sofern der Istwert den Sollwert nicht übersteigt. Daher kann der Mindestdruckverlust beispielsweise bei $V_{min}$ kleiner 1 Pascal, bei $V_{mid}$ 10 Pascal und bei $V_{max}$ 40 Pascal betragen. Aus diesen Werten führt der Volumenstromregler seine Regelung durch.

In Fig. 2 ist der Verlauf des Gesamt-Differenzdruckes über den Volumenstromregler pt-p0 [Pa] bei dem erfindungsgemäßen Verfahren gegenüber dem Volumenstrom bzw. gegenüber dem Sollwert [%] aufgetragen. In Fig. 2 sind wiederum die drei Sollwerte $V_{min}$, $V_{mid}$ und Vmax dargestellt, wobei $V_{min}$ einem Sollwert von 10%, $V_{mid}$ einem Sollwert von 50% und $V_{max}$ einem Sollwert von 80% entspricht.

Bei dem erfindungsgemäßen Verfahren ergibt sich für jeden der drei Sollwerte eine eigene Kurve 14 (Druckverlustkurve oder Mindestdruckverlustkurve). Daher ergeben sich drei unterschiedliche Kurven 14, sofern der Volumenstromregler die drei zuvor beschriebenen Sollwerte regeln soll. Alle drei Kurven 14 beginnen im 0-Punkt, haben jedoch aufgrund des unterschiedlichen Differenzdruckunterschiedes einen anderen Verlauf.

Im Gegensetz zu dem bekannten Verfahren sind bei dem erfindungsgemäßen Verfahren in der Datenbank für die verschiedenen Betriebszustände neben den Sollwerten und den zugeordneten Winkelstellungen der Regelstellung noch zusätzlich Winkelstellungen für Vordrosselstellungen des Klappenblattes 3 hinterlegt. Die Winkelstellung einer jeden Vordrosselstellung ist dabei größer als die Maximal-Offenstellung, jedoch kleiner als die Regelstellung. Sobald ein gasförmiges Medium strömt, gibt die Steuer- und/oder Regeleinrichtung 12 bereits bei einem Ist-Wert, der kleiner als der hinterlegte Sollwert ist, ein Stellsignal an den Antrieb 11 aus, woraufhin der Antrieb 11 das Klappenblatt 3 aus seiner aktuellen Stellung, beispielsweise aus der Maximal-Offenstellung, in eine für den aktuell eingestellten Sollwert hinterlegte Vordrosselstellung verlagert.

Insoweit befindet sich das Klappenblatt 3 bei jedem der drei zu regelnden Sollwerte in einer anderen Vordrosselstellung. Die Vordrosselstellung stellt den Punkt dar, in dem die Kurve 14 in die nahezu senkrecht nach oben führende Kurve 14 übergeht. Aus der jeweiligen Vordrosselstellung regelt der Volumenstromregler bei Überschreiten des jeweiligen Sollwertes, was durch die jeweilige Kurve 15 angedeutet ist, heraus, d.h. jedem Sollwert ist eine eigene Kurve 14 zugeordnet, aus der der Volumenstromregler heraus regelt.

Die Winkelstellung der Absperrklappe 3 folgt einer Funktion des vorgegebenen Sollwertes. Jedem zu regelnden Sollwert ist insoweit eine bestimmte Vordrosselstellung des Klappenblatts 3 zugeordnet. Durch die Vordrosselstellung resultiert ein höherer Mindestdruckverlust als in der Maximal-Offenstellung des Klappenblatts 3.

Die Vordrosselstellungen werden in Versuchen einmalig für den Volumenstromregler für den Volumenstrombereich von $V_{min}$ bis $V_{nom}$ ermittelt und derart gewählt, dass ein größerer Druckunterschied als in der Maximal-Offenstellung vorliegt, ohne dass die durch diese Stellung resultierende Verringerung des Strömungsquerschnittes beispielsweise wegen einer Geräuschbildung als störend empfunden wird. Auf Basis dieser Ergebnisse folgt eine mathematische Vorschrift für die vorbeschriebene Funktion für jeden Sollwert. Diese Funktion gilt über den kompletten Bereich von 0% bis 100%. Die Vordrosselstellungen des Klappenblattes 3 sind in der Steuer- und/oder Regeleinrichtung 12 als eine Funktion vom Sollwert hinterlegt. Bei dem erfindungsgemäßen Verfahren wird insoweit für jeden Sollwert in Abhängigkeit des gewünschten Sollwertes mittels einer Funktion die Vordrosselstellung bestimmt.

Im Gegensatz zu dem im Stand der Technik bekannten Verfahren liegt bei dem erfindungsgemäßen Verfahren (Fig. 2) ein vorbestimmter Mindestdruckverlust über dem vollständigen Sollwertbereich von 0% bis 100% vor, wenn sich das Klappenblatt 3 in seiner betreffenden Vordrosselstellung befindet. Wie Fig. 2 zu entnehmen ist, liegen die resultierenden Mindestdruckverluste bei den Vordrosselstellungen für die drei beispielhaft eingetragenen Sollwerte $V_{min}$, $V_{mid}$ und $V_{max}$ auf annähernd gleicher Höhe.

Wird das Klappenblatt 3 bei dem erfindungsgemäßen Verfahren mittels des Antriebs 11 aus seiner Maximal-Offenstellung in seine dem zu regelnden Sollwert entsprechende Vordrosselstellung, die in der Steuer- und/oder Regeleinrichtung 12 als eine Funktion vom jeweiligen Sollwert hinterlegt ist, verlagert, vergrößert sich das dann bestimmte Wirkdrucksignal, sofern die Wirkdruckmessung über das Klappenblatt 3 erfolgt. Es wirkt insoweit ein höheres Wirkdrucksignal auf den Differenzdrucksensor 7. Das höhere Wirkdrucksignal führt zum einen zu einer Verringerung der Messtoleranzen, so dass infolgedessen eine genauere Regelung des Volumenstroms möglich ist. Zum anderen erweist sich als vorteilhaft, dass die Vordrosselstellung das Strömungsprofil im Gehäuse 1 beeinflusst. Durch die Vordrosselstellung erfolgt eine Einschnürung des Gehäuses 1. Durch die daraus resultierende Einschnürung der Strömung kann der Soll-Volumenstrom auch unter schlechten Anströmbedingungen genauer ausgeregelt werden als im Stand der Technik.

**Patentansprüche**

1. Verfahren zur Regelung eines in einer Luftleitung einer klima- und/oder raumlufttechnischen Anlage strömenden Volumenstroms mittels eines in der Luftleitung um eine Schwenkachse (2) schwenkbar gelagerten Klappenblattes (3), wobei das Klappenblatt (3) mittels eines Antriebes (11) zwischen einer Maximal-Offenstellung und einer Maximal-Zustellung verschwenkbar ist, wobei der tatsächliche Volumenstrom durch Erfassung zumindest eines geeigneten IstWertes bestimmt wird und wobei für verschiedene Betriebszustände Sollwerte und zugeordnete Winkelstellungen der Regelstellung des Klappenblattes (3) in einer Datenbank hinterlegt sind, wobei mittels einer elektronischen Steuer- und/oder Regeleinrichtung (12) ein Vergleich zwischen dem jeweils aktuell bestimmten Ist-Wert des Volumenstroms und dem aktuell vorgewählten Sollwert vorgenommen wird und wobei das Klappenblatt (3) während des Betriebs mittels des Antriebes (11) in Abhängigkeit von dem Ist-Wert zwischen einer Grundstellung und einer Regelstellung verschwenkt wird, wobei die Steuer- und/oder Regeleinrichtung (12) bei einem oberhalb des aktuell vorgewählten Sollwerts liegenden Istwert ein Stellsignal an den Antrieb (11) ausgibt, woraufhin der Antrieb (11) das Klappenblatt (3) aus seiner aktuellen Stellung in seine für den aktuell eingestellten Sollwert hinterlegte Regelstellung verlagert, **dadurch gekennzeichnet, dass** in der Datenbank für die verschiedenen Betriebszustände neben den Sollwerten und den zugeordneten Winkelstellungen der Regelstellung zusätzlich Winkelstellungen für Vordrosselstellungen hinterlegt sind, wobei die Winkelstellung der Vordrosselstellungen größer als die Maximal-Offenstellung und kleiner als die Regelstellung ist und wobei die Steuer- und/oder Regeleinrichtung (12) bereits bei einem Ist-Wert, der kleiner als der hinterlegte Sollwert ist, ein Stellsignal an den Antrieb (11) ausgibt, woraufhin der Antrieb (11) das Klappenblatt (3) aus seiner aktuellen Stellung in eine für den aktuell eingestellten Sollwert hinterlegte Vordrosselstellung verlagert.

2. Verfahren nach dem vorhergehenden Anspruch, **dadurch gekennzeichnet, dass** die Steuer- und/oder Regeleinrichtung (12) bei einem oberhalb des Istwertes liegenden Sollwert ein Stellsignal an den Antrieb (11) ausgibt, woraufhin der Antrieb (11) das Klappenblatt (3) aus seiner aktuellen Stellung in Richtung der für den aktuell eingestellten Sollwert hinterlegte Vordrosselstellung verlagert, sofern sich das Klappenblatt (3) noch nicht bereits in der für den aktuell eingestellten Sollwert hinterlegten Vordrosselstellung befindet.

3. Verfahren nach einem der vorhergehenden Ansprüche, **dadurch gekennzeichnet, dass** die Vordrosselstellung in Abhängigkeit vom jeweiligen Sollwert so festgelegt ist, dass für alle Sollwerte bei einem entsprechend dem Sollwert herrschenden Betriebszustand der Differenzdruck über das Klappenblatt (3) einheitlich ist.

4. Verfahren nach einem der vorhergehenden Ansprüche, **dadurch gekennzeichnet, dass** als Antrieb (11) ein elektrisch betriebener Antrieb verwendet wird.

5. Verfahren nach einem der vorhergehenden Ansprüche, **dadurch gekennzeichnet, dass** zur Bestimmung des strömenden Volumenstroms (IstWert) ein zumindest zwei Entnahmestellen (8, 9) aufweisender Differenzdrucksensor (7) verwendet wird.

6. Verfahren nach dem vorhergehenden Anspruch, **dadurch gekennzeichnet, dass** zur Umwandlung des bestimmten Differenzdruckes in ein elektrisches Signal ein mit der Steuer- und/oder Regeleinrichtung (12) verbundener Transmitter (10) verwendet wird.

7. System zur Regelung eines in einer Luftleitung einer klima- und/oder raumlufttechnischen Anlage strömenden Volumenstroms, umfassend ein in der Luftleitung um eine Schwenkachse (2) schwenkbar gelagertes Klappenblatt (3), wobei das Klappenblatt (3) mittels eines Antriebes (11) zwischen einer Maximal-Offenstellung und einer Maximal-Zustellung verschwenkbar ist, eine Einrichtung zur Erfassung zumindest eines geeigneten Ist-Wertes zur Bestimmung des tatsächlichen Volumenstroms, eine Datenbank, in der für verschiedene Betriebszustände Sollwerte und zugeordnete Winkelstellungen der Regelstellung des Klappenblattes (3) hinterlegt sind, und eine elektronische Steuer- und/oder Regeleinrichtung (12), mittels der ein Vergleich zwischen dem jeweils aktuell bestimmten Ist-Wert des Volumenstroms und dem aktuell vorgewählten Sollwert vorgenommen wird und das Klappenblatt (3) während des Betriebs mittels des Antriebes (11) in Abhängigkeit von dem Ist-Wert zwischen einer Grundstellung und einer Regelstellung verschwenkt wird und wobei die Steuer- und/oder Regeleinrichtung (12) bei einem oberhalb des aktuell vorgewählten Sollwerts liegenden Istwert ein Stellsignal an den Antrieb (11) ausgibt, woraufhin der Antrieb (11) das Klappenblatt (3) aus seiner aktuellen Stellung in seine für den aktuell eingestellten Sollwert hinterlegte Regelstellung verlagert, insbesondere zur Durchführung des Verfahrens nach einem der vorhergehenden Ansprüche, **dadurch gekennzeichnet, dass** in der Datenbank für die verschiedenen Betriebszustände neben den Sollwerten und den zugeordneten Winkelstellungen der Regelstellung zusätzlich Winkelstellungen für Vordrosselstellungen hinterlegt sind, wobei die Winkelstellung der Vordrosselstellungen größer als die Maximal-Offenstellung und kleiner als die Regelstellung ist, und die Steuer- und/oder Regeleinrichtung (12) eine Steuerung und/oder Regelung umfasst, die derart eingerichtet ist, dass die Steuer- und/oder Regeleinrichtung (12) bereits bei einem Ist-Wert, der kleiner als der hinterlegte Sollwert ist, ein Stellsignal an den Antrieb (11) ausgibt, woraufhin der Antrieb (11) das Klappenblatt (3) aus seiner aktuellen Stellung in eine für den aktuell eingestellten Sollwert hinterlegte Vordrosselstellung verlagert.

8. System nach dem vorhergehenden Anspruch, **dadurch gekennzeichnet, dass** als Antrieb (11) ein elektrisch betriebener Antrieb vorgesehen ist.

9. System nach einem der Ansprüche 7 bis 8, **dadurch gekennzeichnet, dass** zur Bestimmung des strömenden Volumenstroms (Ist-Wert) ein zumindest zwei Entnahmestellen (8, 9) aufweisender Differenzdrucksensor (7) vorgesehen ist.

10. System nach einem der Ansprüche 7 bis 9, **dadurch gekennzeichnet, dass** zur Umwandlung des bestimmten Differenzdruckes in ein elektrisches Signal ein mit der Steuer- und/oder Regeleinrichtung (12) verbundener Transmitter (10) vorgesehen ist.


**Claims**

1. Method for regulating a volume flow flowing in an air duct of an air conditioning and/or room air system by means of a damper blade (3) mounted in the air duct and capable of pivoting about a pivot axis (2), wherein the damper blade (3) can be pivoted by means of a drive (11) between a maximum open position and a maximum setting position, wherein the actual volume flow is determined by the detection of at least one suitable actual value, and wherein reference values and assigned angle settings of the regulating setting of the damper blade (3) are deposited in a databank, wherein, by means of an electronic control and/or regulating device (12), a comparison is carried out between the respective currently determined actual value of the volume flow and the currently selected reference value, and wherein the damper blade (3) is pivoted during operation by means of the drive (11), as a dependency of the actual value, between a basic setting and a regulated setting, wherein, in the event of an actual value being above the currently selected reference value, the control and/or regulating device (12) issues a setting adjustment signal to the drive (11), whereupon the drive (11) moves the damper blade (3) out of its current setting into its regulating setting deposited for the currently adjusted and set reference value, **characterised in that** deposited in the databank for the various different operational states, in addition to the reference values and the allocated angle settings of the regulating position, additional angle settings are deposited for preliminary choke settings, wherein the angle setting of the preliminary choke settings is greater than the maximum open position and smaller than the regulating setting, and wherein the control and/or regulating device (12) already issues a setting adjustment signal to the drive (11) at an actual value which is smaller than the reference value which is deposited, whereupon the drive (11) then moves the damper blade (3) out of the current position into a preliminary choke position deposited for the reference value which is currently set.

2. Method according to the preceding claim, **characterised in that,** in the event of the reference value being above the actual value, the control and/or regulating device (12) issues an adjustment setting signal to the drive (11), whereupon the drive (11) moves the damper blade (3) out of its current setting in the direction of the preliminary choke position deposited for the currently set reference value, inasmuch as the damper blade (3) is not already located in the preliminary choke position deposited for the currently set reference value.

3. Method according to any one of the preceding claims, **characterised in that** the preliminary choke position is determined as a dependency of the respective reference value in such a way that, with an operational state prevailing which corresponds to the reference value, the differential pressure over the damper blade (3) is uniform for all the reference values.

4. Method according to any one of the preceding claims, **characterised in that** an electrically driven drive is used as the drive (11).

5. Method according to any one of the preceding claims, **characterised in that,** in order to determine the flowing volume flow (actual value), a differential pressure sensor (7) is used which comprises at least two detection points (8, 9).

6. Method according to any one of the preceding claims, **characterised in that,** in order to convert the differential pressure which has been determined into an electrical signal, a transmitter (10) is used which is connected to the control and/or regulating device (12).

7. System for regulating a volume flow flowing in an air duct of an air conditioning and/or room air system, comprising a damper blade (3) mounted so as to be capable of pivoting about a pivot axis (2) in the air duct, wherein the damper blade (3) can be pivoted by means of a drive (11) between a maximum open position and a maximum setting position, a device for detecting at least one suitable actual value for determining the actual volume flow, a databank, in which reference values for different operating states and allocated angle settings of the regulating position of the damper blade (3) are deposited, and an electronic control and/or regulating device (12), by means of which a comparison is carried out between the respective currently determined actual value of the volume and the currently preselected reference value, and, during operation, the damper blade (3) is pivoted by means of the device (11), as a function of the actual value, between a basic setting and a regulating position, and wherein, in the event of the actual value being above the current preselected reference value, the control and/or regulating device (12) issues a setting adjustment signal to the drive (11), whereupon the drive (11) moves the damper blade (3) out of its current setting position into a regulating position deposited for the current reference value which has been set, in particular for carrying out the method according to any one of the preceding claims, **characterised in that,** in addition to the reference values and the allocated angle settings of the regulating position, additional angle settings are deposited in the databank for preliminary choke settings, wherein the angle setting of the preliminary choke settings is greater than the maximum open position and smaller than the regulating setting, and the control and/or regulating device (12) comprises a control and/or regulating capacity which is configured in such a way that, in the event of an actual value being smaller than the deposited reference value, the control and/or regulating device (12) issues an adjustment setting signal to the drive (11), whereupon the drive (11) moves the damper blade (3) out of its current position into a preliminary choke setting deposited for the reference value which has currently been adjusted and set.

8. System according to the preceding claim, **characterised in that** an electrically driven drive is provided as the drive (11).

9. System according to any one of claims 7 to 8, **characterised in that,** in order to determine the volume flow (actual value) which is flowing, provision is made for a differential pressure sensor (7) which comprises at least two detection points (8, 9).

10. System according to any one of claims 7 to 9, **characterised in that,** for the conversion of the specified differential pressure into an electrical signal, a transmitter (10) is provided, which is connected to the control and/or regulating device (12).

## Revendications

1. Procédé de régulation d'un débit volumique circulant dans une canalisation d'air d'une installation technique de climatisation et/ou de ventilation, au moyen d'un clapet (3) monté pivotant dans ladite canalisation d'air autour d'un axe de pivotement (2), ledit clapet (3) étant apte à pivoter, au moyen d'un entraînement (11) entre une position d'ouverture maximale et une position de fermeture maximale, sachant que le débit volumique effectif est déterminé par détection d'au moins une valeur réelle appropriée et sachant que, pour différents états de fonctionnement, des valeurs de consigne et des positions angulaires associées de la position de régulation dudit clapet (3) sont mémorisées dans une banque de données, une comparaison étant effectuée, au moyen d'un dispositif électronique (12) de commande et/ou de régulation, entre la valeur réelle du débit volumique, respectivement déterminée en mode instantané, et la valeur de consigne présélectionnée en mode instantané, et ledit clapet (3) étant animé en service, au moyen de l'entraînement (11), de pivotements entre une position de base et une position de régulation, en fonction de la valeur réelle, sachant que ledit dispositif (12) de commande et/ou de régulation délivre un signal de réglage audit entraînement (11) en présence d'une valeur réelle excédant la valeur de consigne présélectionnée en mode instantané, après quoi ledit entraînement (11) déplace ledit clapet (3) de sa position instantanée à sa position de régulation mémorisée pour la valeur de consigne réglée en mode instantané, **caractérisé par le fait que** des positions angulaires assignées à des positions d'étranglement préalable sont additionnellement mémorisées dans la banque de données pour les différents états de fonctionnement, outre les valeurs de consigne et les positions angulaires associées de la position de régulation, sachant que la position angulaire des positions d'étranglement préalable est supérieure à la position d'ouverture maximale et inférieure à la position de régulation, et sachant que le dispositif (12) de commande et/ou de régulation délivre un signal de réglage à l'entraînement (11) dès la présence d'une valeur réelle inférieure à la valeur de consigne mémorisée, après quoi ledit entraînement (11) déplace le clapet (3) de sa position instantanée à une position d'étranglement préalable mémorisée pour la valeur de consigne réglée en mode instantané.

2. Procédé selon la revendication précédente, **caractérisé par le fait que** le dispositif (12) de commande et/ou de régulation délivre un signal de réglage à l'entraînement (11) en présence d'une valeur de consigne excédant la valeur réelle, après quoi ledit entraînement (11) déplace le clapet (3) à partir de sa position instantanée, en direction de la position d'étranglement préalable mémorisée pour la valeur de consigne réglée en mode instantané, dans la mesure où ledit clapet (3) n'occupe pas déjà ladite position d'étranglement préalable mémorisée pour ladite valeur de consigne réglée en mode instantané.

3. Procédé selon l'une des revendications précédentes, **caractérisé par le fait que** la position d'étranglement préalable est fermement établie en fonction de la valeur de consigne respective, de façon telle que la pression différentielle agissant sur le clapet (3) soit uniforme, pour toutes les valeurs de consigne, dans un état de fonctionnement régnant en concordance avec ladite valeur de consigne.

4. Procédé selon l'une des revendications précédentes, **caractérisé par le fait qu'**un entraînement à actionnement électrique est utilisé en tant qu'entraînement (11).

5. Procédé selon l'une des revendications précédentes, **caractérisé par le fait qu'**un capteur (7) de pressions différentielles, comptant au moins deux zones de prélèvement (8, 9), est utilisé en vue de déterminer le débit volumique en circulation (valeur réelle).

6. Procédé selon la revendication précédente, **caractérisé par le fait qu'**un transmetteur (10), connecté au dispositif (12) de commande et/ou de régulation, est utilisé en vue de convertir la pression différentielle déterminée en un signal électrique.

7. Système de régulation d'un débit volumique circulant dans une canalisation d'air d'une installation technique de climatisation et/ou de ventilation, comprenant un clapet (3) monté pivotant dans ladite canalisation d'air autour d'un axe de pivotement (2), ledit clapet (3) étant apte à pivoter, au moyen d'un entraînement (11) entre une position d'ouverture maximale et une position de fermeture maximale ; un dispositif conçu pour détecter au moins une valeur réelle appropriée, en vue de déterminer le débit volumique effectif ; une banque de données dans laquelle sont mémorisées, pour différents états de fonctionnement, des valeurs de consigne et des positions angulaires associées de la position de régulation dudit clapet (3) ; et un dispositif électronique (12) de commande et/ou de régulation, au moyen duquel est effectuée une comparaison entre la valeur réelle du débit volumique, respectivement déterminée en mode instantané, et la valeur de consigne présélectionnée en mode instantané, sachant que ledit clapet (3) est animé en service, au moyen de l'entraînement (11), de pivotements entre une position de base et une position de régulation, en fonction de la valeur réelle, et sachant que ledit dispositif (12) de commande et/ou de régulation délivre un signal de réglage audit entraînement (11) en présence d'une valeur réelle excédant la valeur de consigne présélectionnée en mode instantané, après quoi ledit entraînement (11) déplace ledit clapet (3) de sa position instantanée à sa position de régulation mémorisée pour la valeur de consigne réglée en mode instantané, notamment pour la mise en œuvre du procédé conforme à l'une des revendications précédentes, **caractérisé par le fait que** des positions angulaires assignées à des positions d'étranglement préalable sont additionnellement mémorisées dans la banque de données pour les différents états de fonctionnement, outre les valeurs de consigne et les positions angulaires associées de la position de régulation, sachant que la position angulaire des positions d'étranglement préalable est supérieure à la position d'ouverture maximale et inférieure à la position de régulation, et sachant que le dispositif (12) de commande et/ou de régulation inclut une commande et/ou une régulation conçue(s) de façon telle que ledit dispositif (12) de commande et/ou de régulation délivre un signal de réglage à l'entraînement (11) dès la présence d'une valeur réelle inférieure à la valeur de consigne mémorisée, après quoi ledit entraînement (11) déplace le clapet (3) de sa position instantanée à une position d'étranglement préalable mémorisée pour la valeur de consigne réglée en mode instantané.

8. Système selon la revendication précédente, **caractérisé par le fait qu'**un entraînement à actionnement électrique est prévu en tant qu'entraînement (11).

9. Système selon l'une des revendications 7 à 8, **caractérisé par le fait qu'**un capteur (7) de pressions différentielles, comptant au moins deux zones de prélèvement (8, 9), est prévu pour déterminer le débit volumique en circulation (valeur réelle).

10. Système selon l'une des revendications 7 à 9, **caractérisé par le fait qu'**un transmetteur (10), connecté au dispositif (12) de commande et/ou de régulation, est prévu pour convertir la pression différentielle déterminée en un signal électrique.

Fig. 1

Fig. 2

Fig. 3

EP 3 879 199 B1

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007019231